# EUROPEAN PATENT APPLICATION

(11) **EP 4 773 290 A1**
(43) Date of publication of application: **08.07.2026**
(21) Application number: 25851863.8
(22) Date of filing: 22.07.2025
(51) Int. Cl.: H01M 10/0562, H01M 10/0525

(54) **ELECTROLYTE COMPOSITE FOR ALL-SOLID-STATE LITHIUM ION SECONDARY BATTERY AND ALL-SOLID-STATE LITHIUM ION SECONDARY BATTERY COMPRISING SAME**

(30) Priority: 05.08.2024 KR 20240103773
(71) Applicant: LG Energy Solution, Ltd., Seoul 07335 (KR)
(72) Inventor: LEE, Jieun, Daejeon 34122 (KR); LEE, Wonrak, Daejeon 34122 (KR); SHIM, Sunggeun, Daejeon 34122 (KR); CHO, Sungjin, Daejeon 34122 (KR); KIM, Youngbok, Daejeon 34122 (KR); KIM, Ji Young, Daejeon 34122 (KR)
(74) Representative: Goddar, Heinz J.
(86) International application number: PCT/KR2025/010800
(87) International publication number: WO 2026/034859

(57) **Abstract**

An electrolyte composite for an all-solid-state lithium-ion secondary battery capable of improving battery performance by applying different solid electrolytes to a cathode side and an anode side of an all-solid-state lithium-ion secondary battery, respectively, and an all-solid-state lithium-ion secondary battery comprising the same are disclosed. The electrolyte composite for an all-solid-state lithium-ion secondary battery comprises two types of phase-separated solid electrolytes, wherein a first solid electrolyte disposed on a cathode side and a second solid electrolyte disposed on an anode side form a layered structure.

## Description

### [TECHNICAL FIELD]

### Cross-Reference to Related Application

The present application claims the benefit of priority based on Korean Patent Application No. 10-2024-0103773 filed on August 05, 2024, and all contents disclosed in the document of the Korean patent application are incorporated as part of this specification.

The present invention relates to an electrolyte composite applicable to an all-solid-state lithium-ion secondary battery and an all-solid-state lithium-ion secondary battery comprising the same, and more particularly, to an electrolyte composite for an all-solid-state lithium-ion secondary battery capable of improving battery performance by applying different solid electrolytes to a cathode side and an anode side of an all-solid-state lithium-ion secondary battery, respectively, and an all-solid-state lithium-ion secondary battery comprising the same.

### [BACKGROUND ART]

Various batteries capable of overcoming the limitations of lithium secondary batteries currently widely commercialized are being researched from the viewpoints of battery capacity, safety, output, large-scale, miniaturization, and the like. Representatively, metal-air batteries having very large theoretical capacity compared to lithium secondary batteries in terms of capacity, all-solid-state batteries having no explosion risk compared to lithium secondary batteries in terms of safety, super capacitors in terms of output, sodium-sulfur batteries (NaS batteries) or redox flow batteries (RFB) in terms of large-scale, and thin film batteries in terms of miniaturization are continuously being researched in academia and industry.

Among these, an all-solid-state battery refers to a battery in which the electrolyte used in a lithium secondary battery is replaced from liquid to solid, and accordingly, safety can be significantly improved because no ignition or explosion occurs due to decomposition reactions of conventional electrolytes since flammable solvents are not used. In addition, the all-solid-state battery has an advantage of dramatically improving energy density per mass and volume of the battery because lithium metal or lithium alloy can be used as an anode active material. Furthermore, the capacity density (capacity per unit weight) of lithium is about 10 times that of graphite generally used as an anode active material. Therefore, when lithium is used as an anode active material, it is possible to make the all-solid-state battery thinner while increasing output.

As such a conventional all-solid-state battery, a battery is known which includes a metal layer formed of a metal that forms an alloy with lithium as an anode active material layer and comprises an interface layer made of amorphous carbon on the anode active material layer. In this type of all-solid-state battery, metallic lithium is deposited between the amorphous carbon interface layer and the anode active material layer during charging, and the deposited metallic lithium ionizes and moves toward the cathode during discharging. However, when the above-described all-solid-state battery repeats charging and discharging, the metallic lithium deposited between the amorphous carbon interface layer and the anode active material layer ionizes and dissolves, thereby creating voids and causing a problem that the battery cannot be used.

To compensate for such problems, the industry has developed an all-solid-state battery consisting of an anode containing carbon materials excluding a lithium metal layer

(i.e., a lithium-free anode). The anode of such an all-solid-state battery does not contain lithium in an initial state or after complete discharge, and during overcharging, lithium ions that have moved from the cathode can be formed as an alloy or compound between the anode current collector and the solid electrolyte to serve as an anode active material (i.e., lithium metal is plated on the surface of the anode current collector during charging).

The above-described all-solid-state battery is manufactured by interposing a solid electrolyte membrane between a cathode and an anode and then pressing at high pressure. To form a composite including such a cathode layer, an electrolyte layer, and an anode layer, processes of using a free-standing electrolyte membrane, transferring an electrolyte membrane to an electrode, or overcoating an electrolyte membrane on an electrode are generally used. Among these, when overcoating an electrolyte membrane on an electrode, there are advantages of good process efficiency and ability to implement the electrolyte layer in a thin film form.

However, when overcoating an electrolyte membrane on an electrode, there also coexist problems that the electrolyte slurry penetrates into the electrode and reacts with the electrode, causing irreversible side reactions of the battery. Therefore, a method is required that can suppress irreversible side reactions of the battery and improve output characteristics while overcoating an electrolyte membrane on an electrode.

### [SUMMARY OF THE INVENTION]

### [TECHNICAL PROBLEM]

Therefore, an objective of the present invention is to provide an electrolyte composite for an all-solid-state lithium-ion secondary battery capable of improving battery performance by applying different solid electrolytes to a cathode side and an anode side of an all-solid-state lithium-ion secondary battery, respectively, and an all-solid-state lithium-ion secondary battery comprising the same.

### [TECHNICAL SOLUTION]

To achieve the above objective, the present invention provides an electrolyte composite for an all-solid-state lithium-ion secondary battery comprising two types of phase-separated solid electrolytes, wherein a first solid electrolyte disposed on a cathode side and a second solid electrolyte disposed on an anode side form a layered structure.

In addition, the present invention provides an all-solid-state lithium-ion secondary battery comprising a cathode; an anode; and an electrolyte composite layer disposed between the cathode and the anode and comprising the electrolyte composite.

### [EFFECTS OF THE INVENTION]

According to the electrolyte composite for an all-solid-state lithium-ion secondary battery and the all-solid-state lithium-ion secondary battery comprising the same of the present invention, there is an advantage of improving battery performance such as output characteristics by suppressing irreversible side reactions of the battery by applying different solid electrolytes to a cathode side and an anode side of an all-solid-state lithium-ion secondary battery, respectively.

### [BRIEF DESCRIPTION OF THE DRAWINGS]

FIG. 1 is a schematic diagram showing an electrolyte composite according to an embodiment of the present invention interposed between a cathode and an anode.
FIG. 2 is a cross-sectional schematic diagram showing a configuration of an all-solid-state lithium-ion secondary battery according to an embodiment of the present invention.
FIG. 3 is a cross-sectional schematic diagram showing a configuration of an all-solid-state lithium-ion secondary battery according to an embodiment of the present invention.
FIG. 4 is a graph showing performance of all-solid-state lithium-ion secondary batteries manufactured according to an embodiment and comparative examples of the present invention.

### [BEST MODE FOR CARRYING OUT THE INVENTION]

Hereinafter, the present invention will be described in detail with reference to the accompanying drawings.

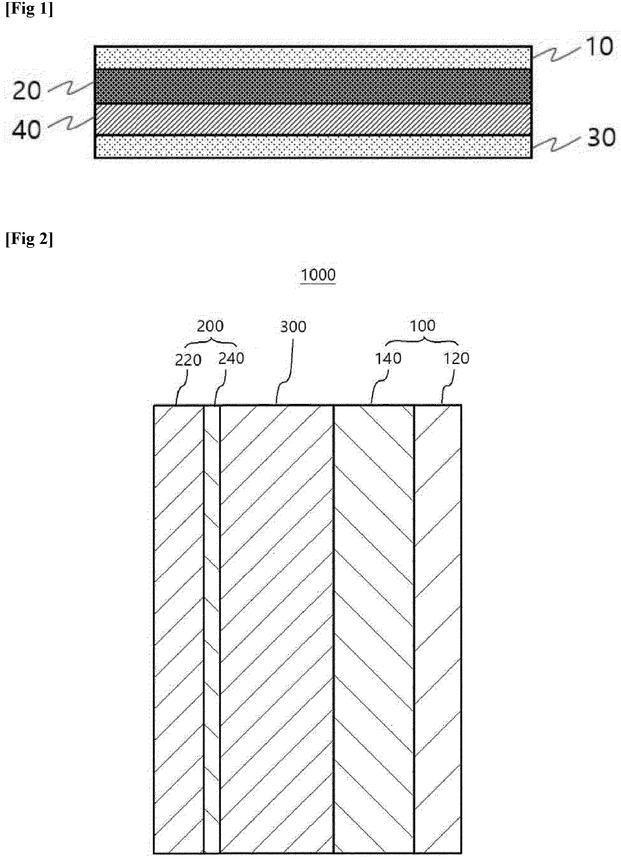

FIG. 1 is a schematic diagram showing an electrolyte composite according to an embodiment of the present invention interposed between a cathode and an anode. The electrolyte composite for an all-solid-state lithium-ion secondary battery according to the present invention comprises two types of phase-separated solid electrolytes, as shown in FIG. 1, wherein a first solid electrolyte 20 disposed on a cathode 10 side and a second solid electrolyte 40 disposed on an anode 30 side form a layered structure.

The electrolyte composite for an all-solid-state lithium-ion secondary battery is formed by drying an electrolyte slurry, and when applied to an all-solid-state lithium-ion secondary battery, it is formed by overcoating and drying an electrolyte slurry on an electrode. The electrolyte composite for an all-solid-state lithium-ion secondary battery of the present invention can suppress irreversible side reactions of a battery or electrode and improve output characteristics by two types of phase-separated solid electrolyte layers each comprising electrolytes of different compositions.

The first solid electrolyte 20 is applied to a surface of the cathode, and may be applied to at least part of surfaces of components constituting the cathode, for example, a cathode active material.

The first solid electrolyte 20 may be in an amorphous state, a crystalline state, or a mixed state of amorphous and crystalline.

The first solid electrolyte 20 may comprise any one or more selected from sulfide-based solid electrolyte, polymer-based solid electrolyte, and oxide-based solid electrolyte, but preferably comprises only sulfide-based solid electrolyte.

More specifically, the first solid electrolyte 20 basically comprises a first sulfide-based solid electrolyte and a first binder.

The first sulfide-based solid electrolyte has an Argyrodite-type crystal structure and comprises a compound represented by the following Formula 1.

[Formula 1] Li₍₆₋ₓ₎PS₍₅₋ₓ₎Cl_{(1+x-y)}Br_{(y)}

In Formula 1, x is 0 < x < 0.6, and y is 0.4 < y < 1.

In the compound of Formula 1 included in the first sulfide-based solid electrolyte, if the x value or y value is outside the above range, the performance of the first solid electrolyte 20 may deteriorate, which may adversely affect the battery performance. In particular, when the y value in the compound represented by Formula 1 is 0.4 or less or 1 or more, there may be a problem that the ionic conductivity of the first solid electrolyte 20 decreases, thereby degrading the output characteristics of the battery.

The first sulfide-based solid electrolyte may further comprise, as necessary, Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is one of Ge, Zn or Ga), Li₂S-GeS₂, Li₂S-SiS₂-Li₃PO₄, Li₂S-SiS₂-LiₚMO_{q} (p and q are positive numbers, M is one of P, Si, Ge, B, Al, Ga or In), or combinations thereof. At this time, when using one comprising Li₂S-P₂S₅, the mixing molar ratio of Li₂S and P₂S₅ may be selected from the range of, for example, Li₂S : P₂S₅ = 50 : 50 to 90 : 10.

However, it is preferable that the first sulfide-based solid electrolyte comprises only the compound represented by Formula 1 so that the first solid electrolyte 20 can exhibit optimal performance.

The first binder included in the first solid electrolyte 20 plays a pivotal role in or assists in adhesion between the first solid electrolyte 20 and the second solid electrolyte 40 and adhesion between the first solid electrolyte 20 and the cathode 10.

The first binder preferably basically comprises a rubber-based binder, and may further comprise one or more selected from the group consisting of acrylonitrile copolymer, acrylonitrile-styrene-butadiene copolymer, polyethylene, polypropylene, chlorosulfonated polyethylene, polyvinylpyrrolidone, cellulose acetate, cellulose acetate butyrate, polyamide, polyimide, polycarboxylate, and compounds exhibiting similar properties thereto.

Examples of the rubber-based binder include butadiene-based rubbers such as butadiene rubber (BR), styrene butadiene rubber (SBR), acrylic styrene butadiene rubber (ASBR), acrylonitrile-butadiene rubber (ABR), nitrile butadiene rubber (NBR), and hydrogenated nitrile butadiene rubber (HNBR), acrylic rubber, and fluorine-based rubber, and may comprise one or more thereof.

However, it may be more preferable that the first binder basically comprises nitrile butadiene rubber.

The first binder may be the same as or different from a second binder included in the second solid electrolyte 40 to be described later. In addition, the first binder may be the same as or different from a binder that may be included in the cathode 10.

The content ratio of the first sulfide-based solid electrolyte and the first binder included in the first solid electrolyte 20 may be 90:10 to 98:2, preferably 91:9 to 97:3, more preferably 93:7 to 95:5 by weight ratio.

If the content of the first binder is less than 2% by weight, problems such as the electrolyte slurry not being dispersed may occur due to insufficient binder content.

In addition, if the content of the first binder exceeds 10% by weight, problems such as gelation of the electrolyte slurry may occur due to excessive binder content.

Meanwhile, during manufacturing of the first solid electrolyte 20, a first solvent may be included in a first electrolyte slurry. The first solvent serves to dissolve the first binder and the like, and comprises a solvent having a dielectric constant of greater than 0 and less than 20, preferably 0.1 to 10, more preferably 0.3 to 5. In particular, since sulfide-based solid electrolyte has a characteristic that its structure collapses when reacting with polar organic solvents, the upper limit of the dielectric constant of the first solvent must be less than 20.

More specifically, the first electrolyte slurry may comprise one or more of the following solvents having a dielectric constant of greater than 0 and less than 20. Such solvents include butyrate-based compounds such as n-butyl butyrate, iso-butyl butyrate, pentyl butyrate, hexyl butyrate, and heptyl butyrate; sulfone-based compounds such as ethylmethyl sulfone and tetramethylene sulfone; nitrile-based compounds such as acetonitrile; carbonate-based compounds such as propylene carbonate; γ-butyrolactone; toluene-based compounds; xylene-based compounds; anisole-based compounds; benzene-based compounds; methane-based hydrocarbon compounds having 6 or more carbon atoms such as hexane, heptane, nonane, and decane; methane-based hydrocarbon compounds containing halogen elements such as dibromomethane and dichloromethane; chloroform-based compounds; and acetate-based compounds such as benzyl acetate and octyl acetate.

The first solvent may preferably comprise one or more of butyrate-based compounds, toluene-based compounds, xylene-based compounds, anisole-based compounds, and acetate-based compounds, and may more preferably basically comprise butyrate-based compounds.

Next, the second solid electrolyte 40 is applied to a surface of the anode, and may be applied to at least part of surfaces of components constituting the anode, for example, carbon material particles or inorganic particles.

The second solid electrolyte 40 may be in an amorphous state, a crystalline state, or a mixed state of amorphous and crystalline, like the first solid electrolyte 20.

The second solid electrolyte 40 may comprise any one or more selected from sulfide-based solid electrolyte, polymer-based solid electrolyte, and oxide-based solid electrolyte, but preferably comprises only sulfide-based solid electrolyte like the first solid electrolyte 20.

More specifically, the second solid electrolyte 40 basically comprises a second sulfide-based solid electrolyte and a second binder.

The second sulfide-based solid electrolyte has an Argyrodite-type crystal structure and comprises a compound represented by the following Formula 2.

[Formula 2] Li₍₆₋ₓ₎PS₍₅₋ₓ₎Cl_{(1+x-y)}Br_{(y)}

In Formula 2, x is 0 < x < 0.6, and y is 0 ≤ y < 0.4.

In the compound of Formula 2 included in the second sulfide-based solid electrolyte, if the x value or y value is outside the above range, the performance of the second solid electrolyte 40 may deteriorate, which may adversely affect the battery performance. In particular, when the y value in the compound represented by Formula 2 is 0.4 or more, there may be a problem that the electrolyte is eluted in the solvent during the overcoating process, causing side reactions with the electrode.

The second sulfide-based solid electrolyte may further comprise, as necessary, Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is one of Ge, Zn or Ga), Li₂S-GeS₂, Li₂S-SiS₂-Li₃PO₄, Li₂S-SiS₂-LiₚMO_{q} (p and q are positive numbers, M is one of P, Si, Ge, B, Al, Ga or In), or combinations thereof. At this time, when using one comprising Li₂S-P₂S₅, the mixing molar ratio of Li₂S and P₂S₅ may be selected from the range of, for example, Li₂S : P₂S₅ = 50 : 50 to 90 : 10.

However, it is preferable that the second sulfide-based solid electrolyte comprises only the compound represented by Formula 2 so that the second solid electrolyte 40 can exhibit optimal performance.

The second binder included in the second solid electrolyte 40 plays a pivotal role in or assists in adhesion between the first solid electrolyte 20 and the second solid electrolyte 40 and adhesion between the second solid electrolyte 40 and the anode 30.

The second binder also preferably basically comprises a rubber-based binder like the first binder, and may further comprise one or more selected from the group consisting of acrylonitrile copolymer, acrylonitrile-styrene-butadiene copolymer, polyethylene, polypropylene, chlorosulfonated polyethylene, polyvinylpyrrolidone, cellulose acetate, cellulose acetate butyrate, polyamide, polyimide, polycarboxylate, and compounds exhibiting similar properties thereto.

Examples of the rubber-based binder include butadiene-based rubbers such as butadiene rubber (BR), styrene butadiene rubber (SBR), acrylic styrene butadiene rubber (ASBR), acrylonitrile-butadiene rubber (ABR), nitrile butadiene rubber (NBR), and hydrogenated nitrile butadiene rubber (HNBR), acrylic rubber, and fluorine-based rubber, and may comprise one or more thereof.

However, it may be more preferable that the second binder basically comprises nitrile butadiene rubber.

The second binder may be the same as or different from the first binder included in the first solid electrolyte 20 as described above. In addition, the second binder may be the same as or different from a binder that may be included in the anode 30.

The content ratio of the second sulfide-based solid electrolyte and the second binder included in the second solid electrolyte 40 may be 90:10 to 98:2, preferably 91:9 to 97:3, more preferably 93:7 to 95:5 by weight ratio.

If the content of the second binder is less than 2% by weight, problems such as the electrolyte slurry not being dispersed may occur due to insufficient binder content.

In addition, if the content of the second binder exceeds 10% by weight, problems such as gelation of the electrolyte slurry may occur due to excessive binder content.

Meanwhile, during manufacturing of the second solid electrolyte 40, a second solvent may be included in a second electrolyte slurry. The second solvent serves to dissolve the second binder and the like, and comprises a solvent having a dielectric constant of greater than 0 and less than 20, preferably 0.1 to 10, more preferably 0.3 to 5. In particular, since sulfide-based solid electrolyte has a characteristic that its structure collapses when reacting with polar organic solvents, the upper limit of the dielectric constant of the second solvent must also be less than 20 like the first solvent.

More specifically, the second electrolyte slurry may comprise one or more of the following solvents having a dielectric constant of greater than 0 and less than 20. Such solvents include butyrate-based compounds such as n-butyl butyrate, iso-butyl butyrate, pentyl butyrate, hexyl butyrate, and heptyl butyrate; sulfone-based compounds such as ethylmethyl sulfone and tetramethylene sulfone; nitrile-based compounds such as acetonitrile; carbonate-based compounds such as propylene carbonate; γ-butyrolactone; toluene-based compounds; xylene-based compounds; anisole-based compounds; benzene-based compounds; methane-based hydrocarbon compounds having 6 or more carbon atoms such as hexane, heptane, nonane, and decane; methane-based hydrocarbon compounds containing halogen elements such as dibromomethane and dichloromethane; chloroform-based compounds; and acetate-based compounds such as benzyl acetate and octyl acetate.

The second solvent may preferably comprise one or more of butyrate-based compounds, toluene-based compounds, xylene-based compounds, anisole-based compounds, and acetate-based compounds, and may more preferably basically comprise butyrate-based compounds.

Meanwhile, the thickness ratio of the first solid electrolyte 20 and the second solid electrolyte 40 may be 50-80:50-20, preferably 60-70:40-30, more preferably about 65:35.

If the thickness of the second solid electrolyte 40 exceeds 50% based on the total thickness of the first solid electrolyte 20 and the second solid electrolyte 40 combined, the ionic conductivity of the entire solid electrolyte membrane may decrease, resulting in deterioration of output characteristics.

In addition, if the thickness of the second solid electrolyte 40 is less than 20% based on the total thickness of the first solid electrolyte 20 and the second solid electrolyte 40 combined, there may be a problem of increased non-uniformity in the layer thickness of the second solid electrolyte 40 during slurry coating.

In addition, each of the first solid electrolyte 20 and the second solid electrolyte 40 may further comprise any one or more of a crosslinking monomer and inorganic particles as necessary.

The crosslinking monomer can form a polymer matrix by crosslinking the cathode and electrolyte through photopolymerization or thermal polymerization reactions, and examples include one or more selected from trimethylolpropane ethoxylate triacrylate, polyethyleneglycol diacrylate, triethyleneglycol diacrylate, trimethylolpropaneethoxylate triacrylate, bisphenol A ethoxylate dimethacrylate, derivatives thereof, and mixtures thereof.

The inorganic particles can be used to be uniformly dispersed in the electrolyte composite to improve the mechanical strength of the solid electrolyte, and examples include one or more selected from alumina (Al₂O₃), silicon dioxide (SiO₂), titanium dioxide (TiO₂), barium titanate (BaTiO₃), lithium oxide (Li₂O), lithium fluoride (LiF), lithium hydroxide (LiOH), lithium nitride (Li₃N), barium oxide (BaO), sodium oxide (Na₂O), lithium carbonate (Li₂CO₃), calcium carbonate (CaCO₃), lithium aluminate (LiAlO₂), strontium titanate (SrTiO₃), tin oxide (SnO₂), cerium oxide (CeO₂), magnesium oxide (MgO), nickel oxide (NiO), calcium oxide (CaO), zinc oxide (ZnO), zirconium dioxide (ZrO₂), silicon carbide (SiC), derivatives thereof, and mixtures thereof.

Subsequently, an all-solid-state lithium-ion secondary battery comprising the electrolyte composite for an all-solid-state lithium-ion secondary battery described above will be described.

The all-solid-state lithium-ion secondary battery comprises the electrolyte composite and electrodes facing the electrolyte composite, and is preferably a sulfide-based all-solid-state lithium-ion secondary battery.

FIG. 2 is a cross-sectional schematic diagram showing a configuration of an all-solid-state lithium-ion secondary battery according to an embodiment of the present invention. The all-solid-state lithium-ion secondary battery 1000 according to an embodiment of the present invention is a so-called lithium-ion secondary battery that performs charging and discharging by lithium ions moving between the cathode 100 and the anode 200. Specifically, as shown in FIG. 2, this all-solid-state lithium-ion secondary battery 1000 comprises a cathode 100, an anode 200, and an electrolyte composite layer 300 disposed between the cathode 100 and the anode 200 and comprising the electrolyte composite. Hereinafter, each of these will be described.

### Cathode

As shown in FIG. 2, the cathode 100 comprises a cathode active material layer 140 and a cathode current collector 120 sequentially disposed in the direction of the anode 200. The cathode current collector 120 may be in a plate shape or foil shape. The cathode current collector 120 may be, for example, one metal selected from indium, copper, magnesium, stainless steel, titanium, iron, cobalt, nickel, zinc, aluminum, germanium, and lithium, or an alloy of two or more metals.

The cathode active material layer 140 can reversibly intercalate and deintercalate lithium ions. The cathode active material layer 140 comprises a cathode active material and may further comprise a solid electrolyte. The cathode active material may be a compound capable of lithium insertion/extraction. Examples of compounds capable of lithium insertion/extraction include those represented by: LiₐA_{1-b}B'_{b}D'₂ (0.90≤a≤1.8, 0≤b≤0.5); LiₐE₁-_{b}B'_{b}O_{2-c}D'_{c} (0.90≤a≤1.8, 0≤b≤0.5, 0≤c≤0.05); LiE_{2-b}B'_{b}O_{4-c}D'_{c} (0≤b≤0.5, 0≤c≤0.05); LiₐNi_{1-b-c}Co_{b}B'_{c}D'_{α} (0.90≤a≤1.8, 0≤b≤0.5, 0≤c≤0.05, 0<α≤2); LiₐNi_{1-b-c}Co_{b}B'_{c}O_{2-α}F'_{α} (0.90≤a≤1.8, 0≤b≤0.5, 0≤c≤0.05, 0<α<2); LiₐNi_{1-b-c}Mn_{b}B'_{c}D'_{α} (0.90≤a≤1.8, 0≤b≤0.5, 0≤c≤0.05, 0<α≤2); LiₐNi_{1-b-c}Mn_{b}B'_{c}O_{2-α}F'_{α} (0.90≤a≤1.8, 0≤b≤0.5, 0≤c≤0.05, 0<α<2); LiₐNi_{b}E_{c}G_{d}O₂ (0.90≤a≤1.8, 0≤b≤0.9, 0≤c≤0.5, 0.001≤d≤ 0.1); LiₐNi_{b}Co_{c}Mn_{d}GₑO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiI'O₂; LiNiVO₄; Li_{(3-f)}J₂(PO₄)₃ (0≤f≤2); Li_{(3-f)}Fe₂(PO₄)₃ (0≤f≤2); and LiFePO₄.

In the above formulas, A is Ni, Co, Mn, or combinations thereof; B' is Al, Ni, Co, Mn, Cr, Fe, Mg, Sr, V, rare earth elements, or combinations thereof; D' is O, F, S, P, or combinations thereof; E is Co, Mn, or combinations thereof; F' is F, S, P, or combinations thereof; G is Al, Cr, Mn, Fe, Mg, La, Ce, Sr, V, or combinations thereof; Q is Ti, Mo, Mn, or combinations thereof; I' is Cr, V, Fe, Sc, Y, or combinations thereof; and J is V, Cr, Mn, Co, Ni, Cu, or combinations thereof.

Specific examples of the cathode active material include lithium salts such as lithium cobalt oxide (LCO), lithium nickel oxide, lithium nickel cobalt oxide, lithium nickel cobalt aluminum oxide (NCA), lithium nickel cobalt manganese oxide (NCM), lithium manganese oxide, and lithium iron phosphate, and lithium sulfide. The cathode active material layer 140 may comprise only one selected from these compounds as a cathode active material, or may comprise two or more.

The cathode active material may comprise a lithium salt of a transition metal oxide having a layered rock salt structure among the above-mentioned lithium salts. Here, the layered rock salt structure refers to a structure in which oxygen atom layers and metal atom layers are alternately and regularly arranged in the direction of a cubic rock salt structure, and as a result, each atom layer forms a two-dimensional plane. In addition, the cubic rock salt structure refers to a sodium chloride type structure which is one type of crystal structure. For example, the cubic rock salt structure represents a structure in which face-centered cubic lattices formed by cations and anions are arranged offset from each other by 1/2 of the edge of the unit cell.

The lithium salt of a transition metal oxide having such a layered rock salt structure may be, for example, a ternary lithium transition metal oxide such as LiNiₓCo_{y}Al_{z}O₂ (NCA) or LiNiₓCo_{y}Mn_{z}O₂ (NCM) (where 0 < x < 1, 0 < y < 1, 0 < z < 1, x + y + z = 1). The cathode active material layer 140 may improve the energy density and thermal stability of the all-solid-state lithium-ion secondary battery 1000 by comprising a lithium salt of a ternary transition metal oxide having such a layered rock salt structure as a cathode active material.

Examples of the shape of the cathode active material include particle shapes such as spherical and elliptical spherical. In addition, the particle size of the cathode active material is not particularly limited and may be in a range applicable to cathode active materials of conventional all-solid-state lithium-ion secondary batteries. In addition, the content of the cathode active material in the cathode active material layer 140 is also not particularly limited and may be in a range applicable to cathodes of conventional all-solid-state lithium-ion secondary batteries.

The compound having a coating layer on its surface may also be used, and the compound and the compound having a coating layer may be mixed and used. This coating layer may comprise a coating element compound of oxide of a coating element, hydroxide, oxyhydroxide of a coating element, oxycarbonate of a coating element, or hydroxycarbonate of a coating element. The compounds forming these coating layers may be amorphous or crystalline. Examples of coating elements included in the coating layer include Mg, Al, Co, K, Na, Ca, Si, Ti, V, Sn, Ge, Ga, B, As, Zr, or mixtures thereof, and specific examples of the coating layer include Li₂O-ZrO₂. The coating layer formation process may use any coating method as long as it can coat the compound using these elements by a method that does not adversely affect the physical properties of the cathode active material (for example, spray coating, dipping method, etc.), and specific description thereof will be omitted as it can be well understood by those skilled in the art.

The solid electrolyte that may be further included in the cathode active material layer 140 may be the same as or different from the solid electrolyte included in the electrolyte composite layer 300 to be described later. In addition, the cathode active material layer 140 may comprise not only the above-described cathode active material and solid electrolyte, but also additives such as a conductive material, a binder, a filler, a dispersant, or an ion conductivity aid. Examples of the conductive material include graphite, carbon black, acetylene black, Ketjen black, carbon fiber, or metal powder. In addition, the binder is mixed with the active material and the conductive material to bind each component and help particle growth, and examples include styrene butadiene rubber (SBR), polytetrafluoroethylene, polyvinylidene fluoride, or polyethylene. In addition, examples of the filler, dispersant, or ion conductivity aid include known ones conventionally used in electrodes of all-solid-state lithium-ion secondary batteries. The cathode active material layer 140 may comprise the above cathode active material, conductive material, and binder in granular form.

### Anode

Next, the anode 200 comprises an anode active material layer 240 positioned closer to the cathode 100 side and in contact with the electrolyte composite layer 300, and an anode current collector 220 positioned at the outermost position in the stacking direction, facing the opposite surface of the anode active material layer 240 that does not contact the electrolyte composite layer 300. The anode may not include separate lithium metal except for lithium metal formed during charging (i.e., corresponding to an anode-free all-solid-state battery).

### Anode Active Material Layer

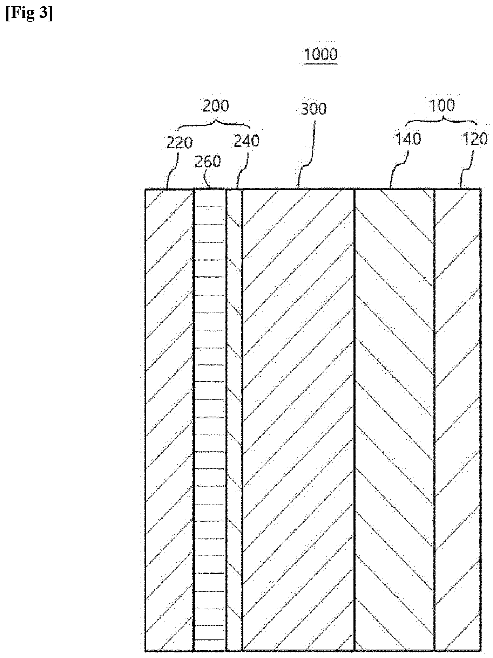

The anode active material layer 240 may comprise one or more types of anode active materials capable of forming alloys or compounds with lithium. In an initial state or after complete discharge, lithium may not be included between the anode current collector 220, the anode active material layer 240, or between the anode active material layer 240 and the electrolyte composite layer 300. FIG. 3 is a cross-sectional schematic diagram showing a configuration of an all-solid-state lithium-ion secondary battery according to an embodiment of the present invention.

As will be described later, when overcharging the all-solid-state lithium-ion secondary battery 1000 according to an embodiment, the anode active material included in the anode active material layer 240 and lithium ions that have moved from the cathode 100 form an alloy or compound, and for example, as shown in FIG. 3, a metal layer 260 mainly composed of lithium may be formed (deposited) on the anode 200. The metal layer 260 may be deposited and formed between the anode current collector 220 and the anode active material layer 240, inside the anode active material layer 240, or both. When the metal layer 260 is positioned between the anode current collector 220 and the anode active material layer 240, the metal layer 260 may be formed closer to the anode current collector 220 than the anode active material layer 240.

The anode active material layer 240 according to an embodiment of the present invention may comprise, as an anode active material, one or more lithium-philic materials selected from the group consisting of silver (Ag), gold (Au), platinum (Pt), zinc (Zn), silicon (Si), magnesium (Mg), copper oxide (CuO), zinc oxide (ZnO), cobalt oxide (CoO), manganese monoxide (MnO), silicon dioxide (SiO₂), titanium dioxide (TiO₂), alumina (Al₂O₃), zinc peroxide (ZnO₂), and lithium fluoride (LiF). Among these, applying silver (Ag) as the lithium-philic material may be more preferable. However, it is not limited thereto, and any lithium-philic material having similar properties or characteristics to these may be applied without particular limitation.

Therefore, the metal layer 260 formed during overcharging may comprise a Li (lithium-philic material) alloy containing a γ1 phase, a βLi phase, or a combination phase thereof in which the lithium-philic material is dissolved in lithium. Therefore, during discharging, only Li dissolves from the Li (lithium-philic material) alloy constituting the metal layer 260, and the dissolved lithium-philic material remains, thereby suppressing the generation of voids. In this case, the content of the lithium-philic material in the deposited Li-lithium-philic material solid solution may be 60% by weight or less. Within such a range, the decrease in average discharge potential due to the influence of the lithium-philic material can be effectively suppressed. On the other hand, if the content of the lithium-philic material in the deposited Li-lithium-philic material solid solution is too small, the amount of lithium-philic material remaining during discharge decreases, and it may be difficult to sufficiently suppress the generation of voids. For this reason, the content of the lithium-philic material in the deposited Li-lithium-philic material solid solution may be 20% by weight or more, for example, 40% by weight or more.

In an embodiment of the present invention, the lithium-philic material does not necessarily need to exist uniformly in the anode active material layer 240, and may be localized on the anode current collector 220 side in the anode active material layer 240. In this case, a Li (lithium-philic material) alloy may be formed as the metal layer 260 by lithium ions reaching near the anode current collector 220 reacting with the lithium-philic material localized layer in the anode active material layer 240.

If the content of the lithium-philic material included in the anode active material layer 240 is excessively small, the lithium-philic material remaining during discharge also decreases, making it difficult to suppress the generation of voids. For this reason, the anode active material layer 240 may comprise 10% by weight or more, preferably 20% by weight or more of the lithium-philic material based on 100% by weight of the total anode active material included in the anode active material layer 240 in an initial state before charging and discharging. On the other hand, in relation to the reaction potential between the lithium-philic material and Li, if the lithium-philic material increases, the average discharge potential may decrease and the energy density of the battery may also decrease. Therefore, from the viewpoint of high energy density, the upper limit of the content of the lithium-philic material may preferably be 50% by weight or less based on 100% by weight of the total anode active material included in the anode active material layer 240.

In addition, in the anode active material layer 240, if the content of the lithium-philic material per unit area when viewed from the stacking direction of the anode 200 is excessively small, the lithium-philic material remaining during discharge also decreases, making it difficult to suppress the generation of voids. Therefore, the content of the lithium-philic material per unit area in the anode active material layer 240 may be 0.05 mg/cm² or more, preferably 0.10 mg/cm² or more. On the other hand, if the content of the lithium-philic material per unit area is too high, the average discharge potential may decrease and the energy density of the battery may decrease. Therefore, the upper limit of the content of the lithium-philic material per unit area may be 5 mg/cm² or less, preferably 2 mg/cm² or less.

In addition, the lithium-philic material included in the anode active material layer 240 in an initial state before charging and discharging may be in particle form or film form. When the lithium-philic material exists in particle form, the average particle diameter (d50, diameter length or average diameter) of the lithium-philic material may be 20 nm to 1 µm, but is not limited thereto.

Meanwhile, the anode active material layer 240 may also comprise a carbon material as an anode active material in addition to the lithium-philic material. Amorphous carbon may be preferably used as the carbon material included in the anode active material layer 240. Specific examples of the amorphous carbon include amorphous carbon black (amorphous acetylene black, amorphous furnace black, amorphous Ketjen black), amorphous activated carbon, amorphous graphene, and combinations thereof. However, by positioning carbon materials with relatively small particle sizes on the interface side in contact with the electrolyte composite layer 300 among the anode active material layer 240, the interface of the anode active material layer 240 in contact with the electrolyte composite layer 300 can be made more flat. Based on 100% by weight of the total anode active material included in the anode active material layer 240, the anode active materials other than the lithium-philic material may be 50% by weight or more in total, for example, 70% by weight or more. The content of anode active materials other than the lithium-philic material can be measured by the same method as the method for measuring the content of the lithium-philic material.

The carbon material included in the anode active material layer 240 may contain oxygen. More specifically, the carbon material particles constituting the carbon material may contain 2 to 10 at% of oxygen. When the oxygen is contained in the range of 2 to 10 at%, the surface roughness of the anode active material layer and the driving characteristics of the battery can be further improved. In an embodiment of the present invention, the oxygen may exist in the form contained in functional groups bonded to the carbon material particles. In addition, the functional groups may comprise any one or more selected from the group consisting of carboxyl groups, hydroxyl groups, ether groups, ester groups, aldehyde groups, carbonyl groups, and amide groups.

The carbon material particles containing 2 to 10 at% of oxygen may be manufactured, for example, by oxidizing carbon materials. For example, oxygen functional groups can be introduced to the carbon material surface by treating the carbon material with acid and stirring and reacting at a temperature of 25 to 60°C. The type of acid is not particularly limited and any acid that can introduce oxygen functional groups to the surface of the carbon material is possible. Examples of the acid include sulfuric acid, nitric acid, or mixtures thereof, and oxidizing agents such as potassium permanganate may also be used.

The content of oxygen contained in the carbon material particles can be measured using X-ray photoelectron spectroscopy (XPS or ESCA). For example, it can be measured using a K-Alpha (Thermo Fisher Scientific) device. In an embodiment of the present invention, the oxygen may exist on the surface of the carbon material particles. The surface does not only mean the external surface of the carbon material particles, but also includes the internal surface of pores when pores are present, for example.

When the carbon material contains oxygen as described above, the anode active material layer 240 may comprise 2 to 10 at% oxygen, 65 to 85 at% carbon, and 0.5 to 5 at% Ag, preferably 2.5 to 5 at% oxygen, 74 to 85 at% carbon, and 0.5 to 3 at% Ag. In addition, the anode active material layer 240 may further comprise 5 to 25 at%, preferably 10 to 20 at% of fluorine (F). In addition, the anode active material layer 240 may further comprise 0.01 to 1 at%, preferably 0.01 to 0.5 at% of sulfur (S). In an embodiment of the present invention, the anode active material layer 240 may comprise 2 to 10 at% oxygen, 65 to 85 at% carbon, 0.5 to 5 at% Ag, and 5 to 25 at% fluorine, preferably 2.5 to 5 at% oxygen, 74 to 85 at% carbon, 0.5 to 3 at% Ag, and 10 to 20 at% fluorine, and may further comprise sulfur. The above atomic component ratios can be measured using X-ray photoelectron spectroscopy (XPS or ESCA). For example, the component ratios can be measured using a Nexsa4 (Thermo Fisher Scientific) device.

Meanwhile, the anode active material layer 240 may further comprise a binder for the purpose of stabilizing the anode active material layer 240 on the anode current collector 220. Examples of the binder include resins such as styrene butadiene rubber (SBR), polytetrafluoroethylene, polyvinylidene fluoride, and polyethylene. In addition, the anode active material layer 240 may be appropriately blended with additives used in conventional all-solid-state batteries, for example, fillers, dispersants, ion conductivity aids, and the like. Specific examples of the additives are the same as those described in the cathode section above.

The total thickness of the anode active material layer 240 is not particularly limited and may be, for example, 1 to 100 µm. If the thickness of the anode active material layer 240 is less than 1 µm, the performance of the all-solid-state battery may not be sufficient. In addition, if the thickness of the anode active material layer 240 exceeds 100 µm, the resistance of the anode active material layer 240 may increase, resulting in insufficient performance of the all-solid-state battery. For reference, using the aforementioned binder can easily secure an appropriate thickness of the anode active material layer 240.

### Anode Current Collector

The anode current collector 220 may be positioned at the outermost position in the stacking direction, facing the opposite surface of the anode active material layer 240 that does not contact the electrolyte composite layer 300, as shown in FIG. 2. However, when the battery includes a bi-cell or more structure, it may also be positioned at locations other than the outermost position based on the stacking direction.

The anode current collector 220 may be in plate form or foil form. The anode current collector 220 may comprise a material that does not react with lithium, that is, does not form either an alloy or a compound with lithium. Examples of materials constituting the anode current collector 220 include copper, aluminum, stainless steel, titanium, iron, cobalt, and nickel. The anode current collector 220 may be composed of one of these metals, or may be composed of an alloy of two or more metals or a clad material.

### Initial Charge Capacity Ratio

Meanwhile, the all-solid-state lithium-ion secondary battery 1000 according to an embodiment may be configured such that the initial charge capacity of the cathode active material layer 140 is excessive relative to the initial charge capacity of the anode active material layer 240. As will be described later, the all-solid-state lithium-ion secondary battery 1000 according to an embodiment can be used by charging beyond the initial charge capacity of the anode active material layer 240 (i.e., overcharging). At the beginning of charging, lithium can be intercalated into the anode active material layer 240. That is, the anode active material can form lithium ions and alloys or compounds that have moved from the cathode 100. When charging is performed exceeding the initial charge capacity of the anode active material layer 240, as shown in FIG. 3, lithium is deposited on the back surface of the anode active material layer 240, that is, between the anode current collector 220 and the anode active material layer 240, and a metal layer 260 can be formed by this lithium. The metal layer 260 may be mainly composed of lithium in which the lithium-philic material is dissolved (i.e., lithium-philic material-Li solid solution). This phenomenon may be composed of a lithium-philic material included in the anode, for example, a material that forms an alloy or compound with lithium. During discharging, lithium in the anode active material layer 240 and the metal layer 260 can ionize and move toward the cathode 100 side while leaving the dissolved lithium-philic material remaining. Therefore, lithium can be used as an anode active material in the all-solid-state lithium-ion secondary battery 1000. In addition, since the lithium-philic layer and the anode active material layer 240 simultaneously coat the metal layer 260, they function as a protective layer for the metal layer 260 and can suppress the deposition and growth of dendritic metallic lithium. In this way, short circuit and capacity decrease of the all-solid-state lithium-ion secondary battery 1000 are suppressed, and furthermore, the characteristics of the all-solid-state lithium-ion secondary battery 1000 can be improved. In addition, according to an embodiment, since the metal layer 260 is not preformed, there is also an advantage of reducing the manufacturing cost of the all-solid-state lithium-ion secondary battery 1000.

In the all-solid-state lithium-ion secondary battery 1000 according to an embodiment, the ratio (b+c/a) of the initial charge capacity of the cathode active material layer 140 to the initial charge capacity of the anode active material layer 240 and the lithium-philic layer preferably satisfies the following formula.

[Formula 3] 0.01 < b+c/a < 0.5

In Formula 3, a is the initial charge capacity (mAh) of the cathode active material layer 140, b is the initial charge capacity (mAh) of the anode active material layer 240, and c is the initial charge capacity (mAh) of the lithium-philic layer.

At this time, if the initial charge capacity ratio is 0.01 or less, the lithium-philic layer and the anode active material layer 240 may not function sufficiently as a protective layer, and the characteristics of the all-solid-state lithium-ion secondary battery 1000 may deteriorate. For example, when the thickness of the lithium-philic layer and the anode active material layer 240 is very thin, the capacity ratio may be 0.01 or less. In this case, the lithium-philic layer and the anode active material layer 240 may collapse due to repeated charging and discharging, and dendritic metallic lithium may be deposited and grown. As a result, the characteristics of the all-solid-state lithium-ion secondary battery 1000 may deteriorate. On the other hand, if the initial charge capacity ratio is 0.5 or more, the battery capacity may decrease because the amount of lithium deposition at the anode decreases.

### Method for Manufacturing All-Solid-State Lithium-Ion Secondary Battery

Next, a method for manufacturing the all-solid-state lithium-ion secondary battery 1000 will be described. The all-solid-state lithium-ion secondary battery 1000 according to an embodiment may be manufactured by separately manufacturing the cathode 100, the anode 200, and the electrolyte composite layer 300 and then stacking them. In addition, the all-solid-state lithium-ion secondary battery 1000 according to another embodiment may be manufactured by forming a first solid electrolyte on one surface of the cathode 100, separately forming a second solid electrolyte on one surface of the anode 200, and then stacking so that the first solid electrolyte and the second solid electrolyte face each other.

The cathode manufacturing process first involves adding materials constituting the cathode active material layer 140 (cathode active material, binder, etc.) to a non-polar solvent to prepare a slurry (or paste), then applying the prepared slurry onto the cathode current collector 120 and drying to obtain a laminate. Subsequently, the cathode 100 can be manufactured by pressing the laminate, for example, with isostatic pressure. At this time, the pressing process may be omitted.

Next, the anode manufacturing process involves adding materials constituting the anode active material layer 240 (anode active material including carbon material and lithium-philic material, binder, etc.) to a polar or non-polar solvent to prepare a slurry (or paste), then applying the prepared slurry onto the anode current collector 220 surface-treated with a lithium-philic material and drying to obtain a laminate (however, it may be composed only of an anode current collector surface-treated with a lithium-philic material without an anode active material layer). At this time, the process of surface-treating the anode current collector with a lithium-philic material may be performed by a method selected from the group consisting of atomic layer deposition, sputtering, and plasma methods. Subsequently, the anode 200 can be manufactured by pressing the laminate, for example, with isostatic pressure. At this time, the pressing process may be omitted. In addition, the method of applying the slurry to the anode current collector 220 is not particularly limited, and for example, screen printing, metal mask printing, electrostatic coating, dip coating, spray coating, roll coating, doctor blade method, gravure coating, etc. can be used.

The all-solid-state lithium-ion secondary battery 1000 according to an embodiment can be manufactured by pressing, for example, with isostatic pressure, with the electrolyte composite layer 300 interposed between the cathode 100 and the anode 200 manufactured as described above.

The all-solid-state lithium-ion secondary battery 1000 of the present invention can be manufactured in the structure of a unit cell having a cathode/electrolyte composite layer/anode structure, a bi-cell having a cathode/electrolyte composite layer/anode/electrolyte composite layer/cathode structure, or a stacked battery structure in which the unit cell structure is repeated. In addition, the all-solid-state lithium-ion secondary battery according to the present invention can be utilized as a semi-solid-state battery including even a liquid electrolyte as necessary, and in this case, may further comprise a separate polymer separator.

The shape of the all-solid-state lithium-ion secondary battery 1000 of the present invention is not particularly limited, and examples include coin type, button type, sheet type, stacked type, cylindrical type, flat type, and cone type. In addition, it can also be applied to large batteries used in electric vehicles and the like. For example, the all-solid-state lithium-ion secondary battery 1000 can also be used in hybrid vehicles such as plug-in hybrid electric vehicles (PHEV). In addition, it can also be used in fields requiring large amounts of power storage, for example, electric bicycles or power tools.

### [MODE FOR CARRYING OUT THE INVENTION]

Hereinafter, preferred examples are presented to aid understanding of the present invention, but the following examples are merely illustrative of the present invention, and it is apparent to those skilled in the art that various changes and modifications are possible within the scope and technical spirit of the present invention, and it is natural that such changes and modifications fall within the scope of the appended claims.

### [Example 1] Manufacturing of All-Solid-State Lithium-Ion Secondary Battery

### Manufacturing of Cathode/Electrolyte Composite

First, 80g of lithium transition metal oxide, 6.5g of carbon black, 9.83g of nitrile butadiene rubber (binder), and 8.17g of butyl butyrate (solvent) were placed in a Thinky mixer container and mixed 12 times at 2,000 rpm for 3 minutes each to prepare a cathode slurry. Subsequently, using a spray coating method, the prepared cathode slurry was applied to the surface of a cathode current collector (aluminum foil), vacuum dried at 100°C for 10 hours, and then pressed with isostatic pressure to manufacture a cathode.

Subsequently, 10g of sulfide-based solid electrolyte (Li₅.₇PS₄.₇Cl₀.₄Br₀.₉), 0.3g of butadiene rubber (binder), and 10.3g of butyl butyrate (solvent) were mixed to achieve a solid content of 45-60% by weight, then placed in a Thinky mixer container and mixed 12 times at 2,000 rpm for 3 minutes each to prepare a first electrolyte slurry. Subsequently, the first electrolyte slurry was applied to the active material surface of the prepared cathode using a bar coater and vacuum dried at 70°C for 5 hours to manufacture a cathode/electrolyte composite.

### Manufacturing of Anode/Electrolyte Composite

First, 6.5g of carbon black, 9.83g of PVdF binder (6% solid content), and 8.17g of NMP solvent were placed in a Thinky mixer container and mixed 12 times at 2,000 rpm for 3 minutes each to prepare an anode active material slurry. Subsequently, using a spray coating method, the prepared anode active material slurry was applied to the surface of an anode current collector (SUS foil), vacuum dried at 100°C for 10 hours, and then pressed with isostatic pressure to manufacture an anode.

Subsequently, 10g of sulfide-based solid electrolyte (Li₅.₆PS₄.₆Cl₁.₄), 0.3g of butadiene rubber (binder), and 10.3g of butyl butyrate (solvent) were mixed to achieve a solid content of 45-60% by weight, then placed in a Thinky mixer container and mixed 12 times at 2,000 rpm for 3 minutes each to prepare a second electrolyte slurry. Subsequently, the second electrolyte slurry was applied to the active material surface of the prepared anode using a bar coater and vacuum dried at 70°C for 5 hours to manufacture an anode/electrolyte composite.

### Manufacturing of All-Solid-State Battery

The manufactured cathode/electrolyte composite and anode/electrolyte composite were stacked so that the electrolytes faced each other, then covered with a polypropylene pouch, sealed, and isotropically pressed for 30 minutes to manufacture an all-solid-state battery stacked in the order of anode/second solid electrolyte/first solid electrolyte/cathode.

### [Comparative Example 1] Manufacturing of All-Solid-State Lithium-Ion Secondary Battery

The electrolyte applied to the cathode/electrolyte composite of Example 1 (i.e., the first electrolyte) was coated on the active material surface of the anode manufactured in Example 1 (coating conditions were the same as Example 1), and then the cathode manufactured in Example 1 was stacked on the electrolyte surface so that the active material of the cathode and the electrolyte faced each other. Subsequently, the laminate was covered with a polypropylene pouch, sealed, and isotropically pressed for 30 minutes to manufacture an all-solid-state battery stacked in the order of anode/first solid electrolyte/cathode.

### [Comparative Example 2] Manufacturing of All-Solid-State Lithium-Ion Secondary Battery

The cathode manufactured in Example 1 was stacked on the electrolyte surface (i.e., the second electrolyte) of the anode/electrolyte composite manufactured in Example 1 so that the active material of the cathode and the electrolyte of the anode/electrolyte composite faced each other. Subsequently, the laminate was covered with a polypropylene pouch, sealed, and isotropically pressed for 30 minutes to manufacture an all-solid-state battery stacked in the order of anode/second solid electrolyte/cathode.

### [Comparative Example 3] Manufacturing of All-Solid-State Lithium-Ion Secondary Battery

An all-solid-state battery stacked in the order of anode/first solid electrolyte/second solid electrolyte/cathode was manufactured in the same manner as Example 1, except that the electrolytes in the cathode/electrolyte composite and anode/electrolyte composite manufactured in Example 1 were exchanged with each other.

### [Experimental Example 1] Performance Evaluation of All-Solid-State Battery

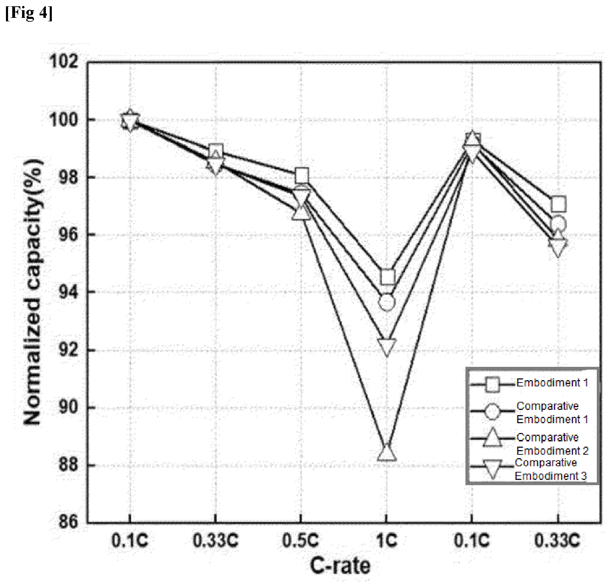

For each of the all-solid-state batteries manufactured in Example 1 and Comparative Examples 1 to 3, an operating pressure of 10 MPa was applied using a jig, and charge/discharge was performed under the following conditions with a constant operating pressure applied to evaluate the capacity retention rate according to charge/discharge cycles, and the results are shown in Table 1 below and FIG. 4.
- Charge/discharge conditions: Charged to 4.25V in CC/CV mode at 0.33C at an operating temperature of 60°C, and discharged to 3.0V with constant current, repeating charge/discharge 50 times

**[Table 1]**

| | 0.1C Initial Capacity | 0.1C Initial | 1C Discharge |
|---|---|---|---|
| | (mAh g⁻¹) | Efficiency (%) | Capacity (mAh g⁻¹) |
| Example 1 | 185.9 | 86.0 | 175.8 |
| Comparative Example 1 | 181.5 | 84.5 | 170.0 |
| Comparative Example 2 | 185.3 | 86.1 | 163.8 |
| Comparative Example 3 | 183.1 | 85.1 | 168.8 |

As shown above, as a result of evaluating the performance of the all-solid-state batteries manufactured in Example 1 and Comparative Examples 1 to 3, the battery of Example 1, in which electrolytes with different compositions were coated on the cathode side and anode side respectively, did not show the conventional problem of electrolyte eluting into the solvent and causing side reactions between the electrode and electrolyte even though the electrolyte was overcoated on the electrode, and accordingly, it was confirmed that output characteristics such as initial capacity efficiency of the battery were improved.

On the other hand, the battery of Comparative Example 1, in which only the first solid electrolyte (Li₅.₇PS₄.₇Cl₀.₄Br₀.₉) was interposed between the cathode and anode, showed a decrease in initial efficiency due to the inclusion of only one type of electrolyte containing excessive Br, which caused the electrolyte to elute into the solvent during the overcoating process and side reactions occurred between the electrode and electrolyte.

In addition, it was confirmed that the battery of Comparative Example 2, in which only the second solid electrolyte (Li₅.₆PS₄.₆Cl₁.₄) was interposed between the cathode and anode, had deteriorated output characteristics due to the inclusion of only one type of electrolyte with relatively low ionic conductivity, that is, an electrolyte not containing Br.

In addition, the battery of Comparative Example 3, in which the electrolytes in the cathode/electrolyte composite and anode/electrolyte composite manufactured in Example 1 were exchanged with each other, showed phenomena such as decreased initial efficiency due to electrolyte elution and side reactions occurring during the process of overcoating the first solid electrolyte on the anode.

Through the above results, it can be seen that if only one type (first solid electrolyte or second solid electrolyte) of the electrolyte composite provided by the present invention is used, or even if the same electrolyte composite is used but the specific arrangement positions of the electrolyte composite disclosed by the present invention are not followed, the conventional problems are not improved.

### [Description of Reference Numerals]

10, 100: Cathode
20: First solid electrolyte
30, 200: Anode
40: Second solid electrolyte
120: Cathode current collector
140: Cathode active material layer
220: Anode current collector
240: Anode active material layer
260: Metal layer
300: Electrolyte composite layer
1000: All-solid-state lithium-ion secondary battery

## Claims

1. An electrolyte composite for an all-solid-state lithium-ion secondary battery comprising:
two types of phase-separated solid electrolytes,
wherein a first solid electrolyte disposed on a cathode side and a second solid electrolyte disposed on an anode side form a layered structure.

2. The electrolyte composite for an all-solid-state lithium-ion secondary battery according to claim 1, wherein the first solid electrolyte comprises a first sulfide-based solid electrolyte and a first binder, and the first sulfide-based solid electrolyte comprises a compound represented by the following Formula 1:
[Formula 1] Li₍₆₋ₓ₎PS₍₅₋ₓ₎Cl_{(1+x-y)}Br_{(y)}
In Formula 1, x is 0 < x < 0.6, and y is 0.4 < y < 1.

3. The electrolyte composite for an all-solid-state lithium-ion secondary battery according to claim 2, wherein the first binder comprises a rubber-based binder.

4. The electrolyte composite for an all-solid-state lithium-ion secondary battery according to claim 3, wherein the rubber-based binder is selected from the group consisting of butadiene-based rubber, acrylic rubber, fluorine-based rubber, and combinations thereof.

5. The electrolyte composite for an all-solid-state lithium-ion secondary battery according to claim 2, wherein a content ratio of the first sulfide-based solid electrolyte and the first binder is 90:10 to 98:2 by weight ratio.

6. The electrolyte composite for an all-solid-state lithium-ion secondary battery according to claim 1, wherein the second solid electrolyte comprises a second sulfide-based solid electrolyte and a second binder, and the second sulfide-based solid electrolyte comprises a compound represented by the following Formula 2:
[Formula 2] Li₍₆₋ₓ₎PS₍₅₋ₓ₎Cl_{(1+x-y)}Br_{(y)}
In Formula 2, x is 0 < x < 0.6, and y is 0 ≤ y < 0.4.

7. The electrolyte composite for an all-solid-state lithium-ion secondary battery according to claim 6, wherein the second binder comprises a rubber-based binder.

8. The electrolyte composite for an all-solid-state lithium-ion secondary battery according to claim 7, wherein the rubber-based binder is selected from the group consisting of butadiene-based rubber, acrylic rubber, fluorine-based rubber, and combinations thereof.

9. The electrolyte composite for an all-solid-state lithium-ion secondary battery according to claim 6, wherein a content ratio of the second sulfide-based solid electrolyte and the second binder is 90:10 to 98:2 by weight ratio.

10. The electrolyte composite for an all-solid-state lithium-ion secondary battery according to claim 1, wherein a thickness ratio of the first solid electrolyte and the second solid electrolyte is 50-80:50-20.

11. An all-solid-state lithium-ion secondary battery comprising:
a cathode;
an anode; and
an electrolyte composite layer disposed between the cathode and the anode and comprising the electrolyte composite of claim 1.

12. The all-solid-state lithium-ion secondary battery according to claim 11, wherein the anode does not comprise separate lithium metal except for lithium metal formed during charging of the battery.

13. The all-solid-state lithium-ion secondary battery according to claim 11, wherein the all-solid-state lithium-ion secondary battery is a sulfide-based all-solid-state lithium-ion secondary battery.
